# EUROPEAN PATENT SPECIFICATION

(11) **EP 0 584 768 B1**
(45) Date of publication and mention of the grant of the patent: **11.08.1999**
(21) Application number: 93113449.8
(22) Date of filing: 24.08.1993
(51) Int. Cl.: H01F 41/18, G11B 5/187

(54) **Method for making soft magnetic film**
Herstellungsverfahren eines weichmagnetischen Filmes
Procédé de fabrication d'un film magnétiquement doux

(30) Priority: 24.08.1992 JP 22377392
(43) Date of publication of application: 02.03.1994
(73) Proprietor: MATSUSHITA ELECTRIC INDUSTRIAL CO., LTD., Kadoma-shi, Osaka 571-8501 (JP)
(72) Inventor: Nago, Kumio, Ikoma-gun, Nara (JP); Aokura, Isamu, Osaka-shi, Osaka (JP); Yamanishi, Hitoshi, Osaka-shi, Osaka (JP); Osano, Koichi, Osaka-shi, Osaka (JP); Sakakima, Hiroshi, Tsuzuki-gun, Kyoto (JP); Suemitsu, Toshiyuki, Minoh-shi, Osaka (JP)
(74) Representative: Eisenführ, Speiser & Partner

(56) References cited:
- PATENT ABSTRACTS OF JAPAN vol. 8, no. 99 (E-243)(1536) 10 May 1984 & JP-59 016 322 (TOKYO SHIBAURA DENKI K.K.) 27 January 1984
- PATENT ABSTRACTS OF JAPAN vol. 12, no. 44 (E-581)9 February 1988 & JP-62 195 109 (HITACHI LTD) 27 August 1987
- IEEE TRANSLATION JOURNAL ON MAGNETICS IN JAPAN vol. 6, no. 1 , January 1991 , NEW YORK US pages 23 - 28 K.TERUNAMA ET AL
- PATENT ABSTRACTS OF JAPAN vol. 16, no. 408 (E-1255)28 August 1992 & JP-04 137 715 (MATSUSHITA ELECTRIC IND CO LTD) 12 May 1992
- JOURNAL OF APPLIED PHYSICS. vol. 65, no. 3 , 1 February 1989 , NEW YORK US pages 1238 - 1242 S.MASAKATSU ET AL

## Description

### BACKGROUND OF THE INVENTION

### 1. Field of the Invention

The present invention relates to a method for producing a soft magnetic film on a substrate according to the preamble of claim 1. Said magnetic film is intended for use in a magnetic head of a magnetic recording and reproducing apparatus such as a video cassette recorder (VCR) and an audio recording and reproducing apparatus.

### 2. Description of the Prior Art

In response to the requirement of the high recording density in a recent magnetic recording technology, much attention has been paid to the development of a magnetic head having a superior performance. In order to achieve a high recording density, it has been necessary to make the track width and the gap length of the magnetic head as narrow as possible and to manufacture a magnetic head from a core material of a soft magnetic film having a high magnetic flux density and a high magnetic permeability.

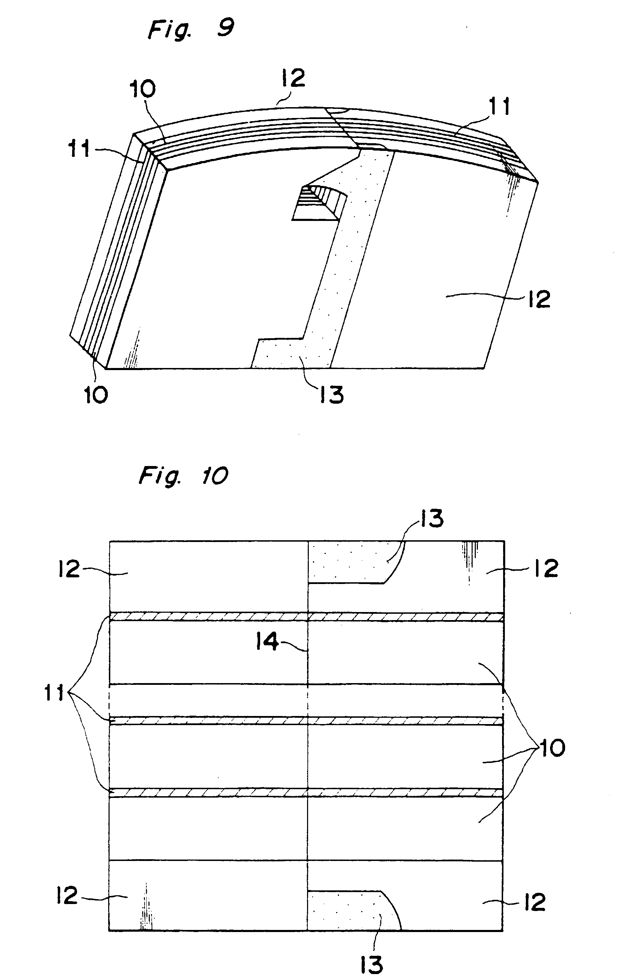

In order to satisfy the requirement mentioned above, various types of magnetic heads have been developed: One example as shown in Fig. 9 is a magnetic head of a laminated-type head having a ring shape in which the core material is made of an integrated layers of a soft magnetic film 10 and an electric insulating film 11 integrated alternately to each other and is sandwitched between a pair of non-magnetic substrates 12. The core material forms a magnetic path. 13 denotes a glass material and 14 a magnetic gap (Fig. 10).

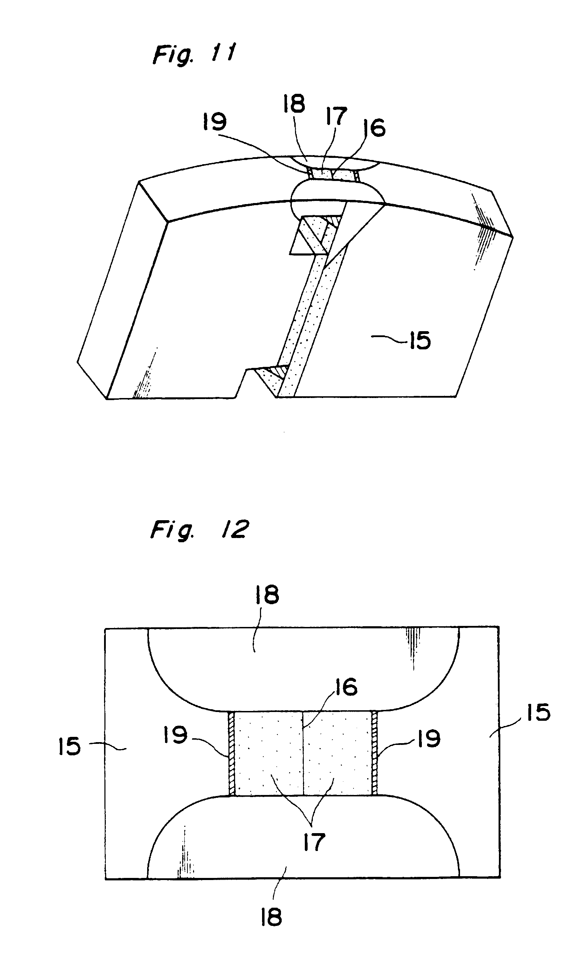

Another example as shown in Fig.11 is a magnetic head (referred to MIG head) in which the majority of the magnetic path is composed of ferrite material 15 and at the vicinity of the magnetic gap 16 easily saturated magnetically there is provided with a soft magnetic film 17. 18 denotes a glass material and 19 an insulating film.

In the magnetic heads, the performance thereof relates closely to the material characteristics of the core material. In order to achieve a high recording density, it is necessary for the core material to have a high saturation magnetic flux density (related to mainly to the recording characteristics) and a high magnetic permeability (related mainly to the reproducing characteristics).

In connection with the requirement mentioned above, the core material for the above laminated-type head must be formed from a material having a high isotropic permeability. A core material practically used at present is Sendust film (Fe-Al-Si alloy) or cobalt base amorphous alloy film. On the other hand, the core material for the MIG head is preferably made of a soft magnetic film having a high magnetic permeability with an uniaxial anisotropy in a plane. The core material practically used at present is Sendust film (Fe-Al-Si alloy) or cobalt base amorphous alloy film. However, the Sendust film (Fe-Al-Si alloy) or cobalt base amorphous alloy film has a saturation magnetic flux density as low as about 1T more or less. Although an effort is directed to an achievement of the high recording density by using a recording medium having a high coercive force, the conventional core material has a limitation in the saturation magnetic flux density.

Under the situation, a research and development have been directed to a soft magnetic film having a high saturation magnetic flux density and a high magnetic permeability. The core material under research is a film composed of (Fe,Co)-M-(N,C,B) alloy system (wherein M is at least one metal selected from the group consisting of Zr, Hf, Ti, Nb, and Ta), Fe-Co-B system alloy or Fe-N system alloy.

On the other hand, a research on a film formation method has been carried out by using an electron beam evaporation method or sputtering method in connection with a soft magnetic material such as the Sendust alloy film or Permalloy film. Specially, a magnetron sputtering method makes it possible to carry out the film formation in a high speed by improving the disadvantage of the sputtering method which carries out the film formation at a rate lower by one order than the electron beam evaporation method. Further, a recent progress in the film formation technology has achieved a new type of sputtering apparatus such as a carrousel type and an in-line type. The sputtering apparatus of the carrousel type is provided with a magnetron sputtering electrode of a rectangular flat plate and carries out the film formation under rotating a substrate holder of a cylinder type. The sputtering apparatus of an in-line type is of a large scale and carries out the film formation under moving a substrate in parallel to a target. These sputtering apparatus can execute the film formation in a high speed which is characteristic to the magnetron sputtering and obtain a uniform film thickness over a large area. As a result, a mass production of the soft magnetic film can be achieved by these sputtering apparatus.

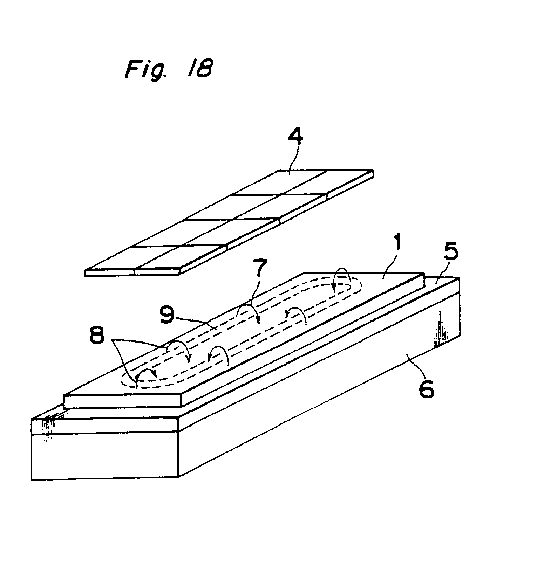

Fig. 18 is a schematic illustration of a conventional magnetron sputtering electrode provided with a target of a rectangular flat plate. A target 1 is adhered to a backing plate 5 with a soldering material such as indium et. al and attached to an electrode body 6 thorough an O-ring for vacuum seal. The target 1 has a magnetic circuit for the magnetron discharge formed at the back side thereof. The magnetic circuit forms a closed loop of lines of magnetic force 7 and has at least a part of the lines of the magnetic force 7 in a way to be arranged in parallel to each other at the surface of the target 1. As a result, there is formed, at the surface of the target 1, a magnetic field of a troidal type having a closed tunnel shape. When the sputtering electrode attached to the target 1 of a rectangular flat plate is applied with a negative voltage through a DC or AC power source, the magnetron discharge is generated at the vicinity of the magnetic field of a troidal type having a closed tunnel shape at which an electric field and a magnetic field cross to each other. Then the target 1 starts sputtering to form a soft magnetic film on a substrate 4.

However, a core material having a high saturation magnetic flux density and a high magnetic permeability is known to be a film composed of (Fe,Co)-M-(N,C,B) alloy system ( M is at least one metal selected from the group consisting of Zr, Hf, Ti, Nb, and Ta), Fe-Co-B system alloy or Fe-N system alloy and is made by a conventional magnetron sputtering method having a target of a rectangular flat plate or by a reactive sputtering using nitrogen gas during formation of a nitride film. In this case, it is necessary to discharge the target composed of a core material having a high saturation magnetic flux density such as (Fe,Co)-M-(N,C,B) alloy system ( M is at least one metal selected from the group consisting of Zr, Hf, Ti, Nb, and Ta), Fe-Co-B system alloy or Fe-N system alloy. The thicker target prevents the magnetic flux from leaking from the target surface. As a result, the magnetron discharge does not occur and prevents the sputtering.

Then, the thinner target permits the magnetron discharge and makes it possible to execute the sputtering. However, the conventional magnetron sputtering method causes the target to be eroded heterogeneously because the target produces an area to be sputtered (referred to an erosion area hereinafter as shown reference numeral 9 of Fig. 18) and an area having the sputtered particles re-adhered thereto. This causes the erosion area to change with the progress of the sputtering. As a result, the thickness distribution of the sputtered film changes and then causes the magnetic properties of the resultant film to change with the change in the thickness distribution. Therefore, there is a problem that the conventional magnetron sputtering method has a poorer efficiency in using the target when the target is made thinner. This results in a problem that it is difficult to manufacture the magnetic film in a large scale.

On the other hand, as described above, the core material for the multilayer type of head requires a material having high permeability and isotropy in a plane. The core material for the MIG head mentioned above and a head of a main-pole driven magnetic head requires a soft magnetic film having a high magnetic permeability to induce an uniaxial anisotropy in a plane. Therefore, it is important to control the magnetic anisotropy.

JP-A-59-16322 (Patent Abstracts of Japan) discloses a method for forming a magnetic film on a substrate, wherein sputtering is performed while a magnetic field is applied to a target surface by a magnet in the neighbourhood of a grooved part of the target which results in the formation of a magnetic film on the surface of the substrate which is arranged opposite to the target. The position of the magnet is at the rear side of the target such that the lines of magnetic force are parallel to the target.

K. Terunuma et al (IEEE Translation Journal on Magnetics, Japan, 6 (1991) January, No. 1, New York, US, pages 23-28) describe the effects of addition of Zr and Ti on iron films containing nitrogen by studying film structures and magnetic properties as functions of the Zr and Ti contents. It is reported that the coercive force of Fe-N films increased sharply after annealing at about 350 °C, while Fe-Zr-N and Fe-Ti-N films retained a small coercive force even after annealing at higher temperatures. The addition of Zr and Ti in small amounts was highly effective in improving the thermal stability of Fe-N because it prevented the growth of iron crystal grains.

JP-A-4-137 715 (Patent Abstracts of Japan) discloses a bias sputtering method to obtain an isotropic soft magnetic alloy nitride film. The magnetic film may contain Ta.

It is the object of the present invention to provide a method for making a soft magnetic film having a high magnetic permeability and a high saturation magnetic flux density together with a desirable magnetic anisotropy. It is an aspect of this object that the soft magnetic film be suitable for mass-production.

This object is attained by a method as defined in claim 1 and a sputtering electrode as defined in claim 10. Suitable embodiments of the method are defined in the respective subclaims.

### SUMMARY OF THE INVENTION

According to one aspect of the present invention, there is provided a method for making a soft magnetic film which uses a sputtering apparatus provided with a sputtering electrode which has permanent magnets arranged above a target of a rectangular flat plate in such a way that lines of magnetic force generated by said permanent magnets are parallel to the surface of said target of a rectangular flat plate and the magnetic strength distribution separated at the center line of said target of a rectangular flat plate is symmetrical while the lines of magnetic force at the right side of said center line is being of a reverse direction to that of the left side of said center line.

The method according to the present invention is suitable for making a ferromagnetic film such as a soft magnetic film which includes, as a main ingredient, Fe or Co, especially Fe-M-N system film which includes as a main ingredient Fe, and 5 to 20 atomic % of N and 5 to 15 atomic % of M (which is at least one element selected from the group consisting of Ta, Zr, Hf, Nb and Ti).

In carrying out the method according to the present invention, a substrate to be provided with such a soft magnetic film is applied with a small negative bias voltage in many cases and with non-bias voltage in some cases. This method can provide a soft magnetic film having a high magnetic permeability and a high saturation magnetic flux density in a large scale in response to the requirement for the head of a high efficiency.

According to another aspect of the present invention, there is provided a method for making a multilayer soft magnetic film having plural soft magnetic films integrated to each other through an electrically insulating film. In the method, each soft magnetic film is formed with negative bias powers different from each other by using the sputtering apparatus according to the present invention. The resultant soft magnetic film has a high magnetic permeability distributed uniformly in a large area and is characterized by a superior mass production to practice the soft magnetic film as a core material of the multilayer type of head.

The soft magnetic films called a Fe-M-N system film include, as a main ingredient, Fe and 5 to 20 atomic % of N and 5 to 15 atomic % of M (which is at least one element selected from the group consisting of Ta, Zr, Hf, Nb and Ti) and are formed on a substrate by means of the magnetron sputtering method with negative bias powers (including zero) which are different from each other. These soft magnetic films having a specified thickness are integrated to each other through an electrically insulating film having a specified thickness. The resultant soft magnetic film has a high magnetic permeability distributed uniformly in a large area and is characterized by a superior mass production to practice the soft magnetic film as a core material of the multilayer type of head operable at high frequency range.

The soft magnetic film called as Fe-M-N system soft magnetic film includes, as a main ingredient, Fe and 5 to 20 atomic % of N and 5 to 15 atomic % of M (which is at least one element selected from the group consisting of Ta, Zr, Hf, Nb and Ti). The resultant soft magnetic film comprises a mixture of fine crystals of α-Fe and fine metal nitride particles. The fine crystals of α-Fe solve at least one element or compound selected from the group consisting of (Ta, Zr, Hf, Nb and Ti), N (nitrogen) and metal (M) nitride which expand the lattice of α-Fe and have an average grain size less than 15 nm while fine crystals of metal nitride have a grain size less than 5 nm. and it shows a higher performance in the soft magnetic characteristics.

According to the method for making a soft magnetic film, there is manufactured a soft magnetic film having a high saturation magnetic flux density and a high magnetic permeability in a large scale, since the magnetron sputtering steps comprises a step of forming a soft magnetic film on a substrate by using a sputtering apparatus provided with a sputtering electrode which has permanent magnets arranged above a target of a rectangular flat plate in such a way that lines of magnetic force generated by said permanent magnets are in parallel to the surface of said target of a rectangular flat plate and which magnetic strength distribution separated at the center line of said target of a rectangular flat plate becomes to be symmetric against said center line while the lines of magnetic force at the right side of said center line is being of a reverse direction to that of the left side of said center line.

According to the preferred embodiment to apply a negative bias power to a substrate during the soft magnetic film formation in the above method, the resultant soft magnetic film formed on the substrate shows magnetic permeability having an anisotropy oriented in one direction at a wide area which is suitable for use in a core material of the MIG head and the main-pole driven magnetic head and is manufactured effectively in a large scale to practice a soft magnetic film for use in a core material of the MIG head. Especially, a power density of 3700W/m² or less attains higher mass-production of soft magnetic film suitable for use in a core material of the MIG head et al.

According to another method, a multilayer of soft magnetic films separated from each other through an electrically insulating film is made by means of negative bias powers (including zero) different from each other. The resultant soft magnetic film formed on the substrate shows high isotropic permeability uniformly distributed in a wide area and is manufactured effectively in a large scale to practice a soft magnetic film for use in a core material of the laminated-type head.

In the soft magnetic film composed of, as a main ingredient, Fe and 5 to 20 atomic % of N and 5 to 15 atomic % of M (which is at least one element selected from the group consisting of Ta, Zr, Hf, Nb and Ti), said soft magnetic film comprises a mixture of fine crystals of α-Fe and fine crystals of metal nitride, in which α-Fe crystals solve at least one element or compound selected from the group consisting of (Ta, Zr, Hf, Nb and Ti), N (nitrogen) and metal (M) nitride and expand to have an average grain size less than 15 nm while fine crystals of metal nitride have a grain size less than 5 nm, so that the resultant soft magnetic film shows a higher performance in the soft magnetic characteristics.

The head comprising the soft magnetic film as at least a part of magnetic circuit which is formed by the present invention realize a high mass-production and a superior record reproducible characteristics against a high coercive force media.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a schematic view of the sputtering apparatus according to the embodiment of the present invention,
Fig. 2 is a schematic view of the magnetic field distribution on the target,
Fig. 3 is a graph showing a relation between the composition of the soft magnetic film and the high frequency (RF) bias power applied to the substrate holder,
Fig. 4 is a graph showing a relation between the coercive force of the soft magnetic film and the RF bias power applied to the substrate holder,
Fig. 5 is a graph showing the x-ray diffraction pattern of the soft magnetic film,
Fig. 6 is a graph showing a variation of the magnetic permeability with a variation in the position in film plane of the soft magnetic film,
Fig. 7 is a graph showing a variation of the magnetic permeability with a variation in the position in film plane of the soft magnetic film,
Fig. 8 is a graph showing a variation of the magnetic permeability with a variation in the position in film plane of the soft magnetic film of a multilayer type,
Fig. 9 is a schematic view of the laminated-type head according to the present invention,
Fig. 10 is an enlarged plane view of the contacting surface of the head shown in Fig.9,
Fig. 11 is a schematic view of the MIG type head according to the present invention,
Fig. 12 is an enlarged plane view of the contacting surface of the head shown in Fig.11,
Fig. 13 is a graph showing a relation between the magnetic permeability and the thickness of soft magnetic film of a multilayer type,
Fig. 14 is a graph showing the frequency dependency in the relation to the magnetic permeability of the soft magnetic film,
Fig. 15 is a graph showing the frequency dependency in the relation to the magnetic permeability of the soft magnetic film of multilayer type having the thickness of 0.05µm of the SiO₂ insulating film,
Fig. 16 is a graph showing the frequency dependency in the relation to the magnetic permeability of the soft magnetic film of multilayer type having the thickness of 0.1µm of the SiO₂ insulating film,
Fig. 17 is a graph showing the frequency dependency in the relation to the magnetic permeability of the soft magnetic film of muitilayer type having the thickness of 0.15µm of the SiO₂ insulating film,
Fig. 18 is a schematic view of the magnetron sputtering electrode according to the prior art.

### DETAILED DESCRIPTION OF THE PREFERRED EMBODIMENTS

### (Example 1)

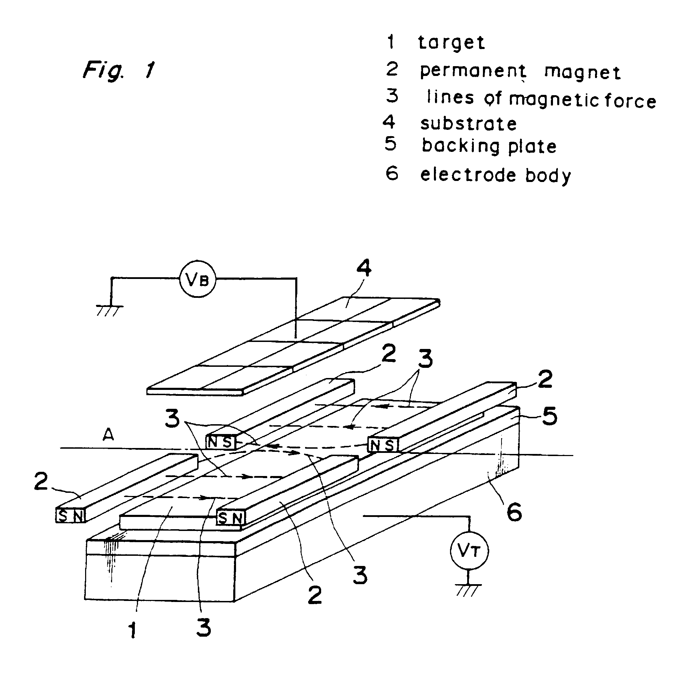

Fig. 1 is a perspective view showing the sputtering electrode and the position of the substrate in the sputtering apparatus according to the first embodiment of the present invention. The description will be directed to the first embodiment referring to Fig. 1. The elements having the same reference numerals as the conventional elements shown in Fig. 18 are omitted from the description.

A target 1 of a rectangular shape has permanent magnets 2 arranged at the side thereof to form magnetic circuit for generation of a magnetic field. Each of permanent magnets 2 comprises plural small magnets for the purpose to change the strength of the magnetic field. Lines of magnetic force 3 are parallel to the surface of the target of a rectangular shape are in parallel to the center line A of the target 1 and are arranged symmetrically against the center line A in connection with the intensity of line of magnetic force. Further, the lines of magnetic force at the right side of the center line A is in a reverse direction to the lines of magnetic force at the left side of the center line A. A substrate 4 is placed above the target of a rectangular shape 1 and is made to be parallel to the surface of the target 1 and then is applied with a bias power.

When the permanent magnets are arranged in such a way that the lines of magnetic force parallel to the surface of the target of a rectangular shape is made to be in one direction, the screw motion of electrons due to the magnetic field and the electric field is limited to one direction. Accordingly, the plasma density shows a change from a high level to a low level in a direction crossing the lines of the magnetic force and being parallel to the surface of the target. As a result, the film thickness distribution shows a large variation.

The soft magnetic film of the Fe-Ta-N system is prepared with a reactive sputtering method using Ar gas having N₂ gas contained therein. The used apparatus is the sputtering apparatus shown in Fig. 1. The used target is a Fe-Ta target of a rectangular shape of length 127 mm and width 381 mm. A substrate holder for holding a substrate has an effective area of 2.7x10⁻²m² (length 100 mm and width 270 mm) and is applied with a RF bias power of 0 to 150 W ( in view of the power density, 0 to 5,556 W/m²). The soft magnetic film of Fe-Ta-N system having a thickness of 2.5 µm is formed on a ceramic substrate which is water cooled and has a thermal expansion coefficient of 115x10⁻⁷/°C.

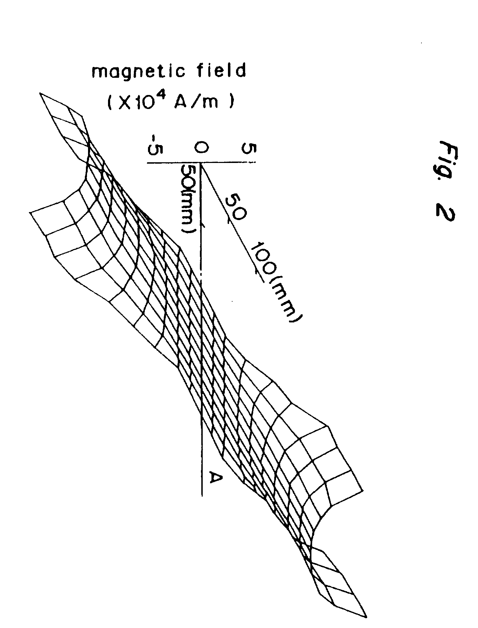

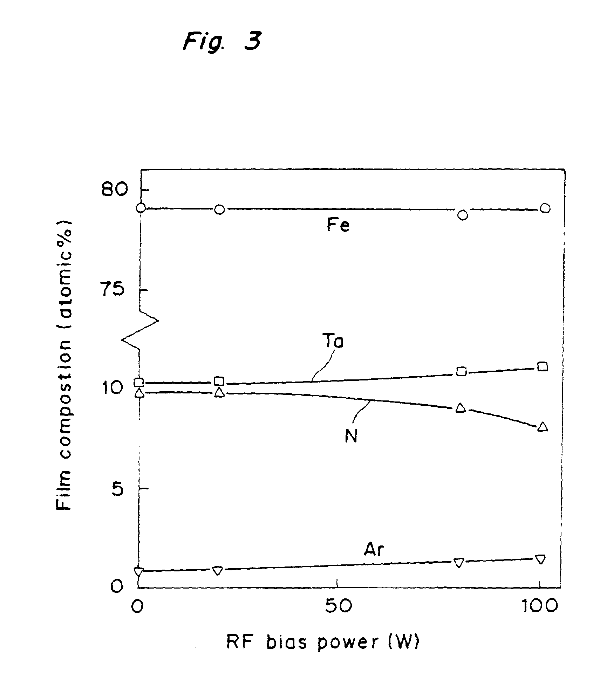

Fig. 2 is a schematic view of the magnetic field distribution in a direction parallel to the surface of the target. The center line A shown in Fig. 2 is the same line as that of Fig. 1. The magnetic field is referred to as positive when the line of magnetic force runs from N pole of the permanent magnet at the right side of Fig. 1 to the S pole of the permanent magnet at the left side. The magnetic field is referred to as negative when the line of magnetic force runs from N pole of the permanent magnet at the left side of Fig. 1 to the S pole of the permanent magnet at the right side. The composition of the magnetic film of Fe-Ta-N system is analyzed with RBS (Rutherford back scattering method). Fig. 3 is a graph showing a relation between the negative bias power applied to the substrate holder and the film composition. It is clear from Fig. 3 that the magnetic film does not changes in the content of Fe at a bias power strength of 0 to 100 W. The Fe content is a constant value of 79 atomic %.

The contents of Ta and N in the soft magnetic film does not change at the bias power ranging from 0 to 20 W and shows a constant value of about 10 atomic %. At a bias power of 100 W, there is not shown a large change, that is, the content of Ta increases only by 1 atomic % and the content of N decreases only by 2 atomic %. The magnetic film includes C.7 to 1.5 atomic % of Ar. It is unavoidable that the film includes several atomic % of Ar or oxygen.

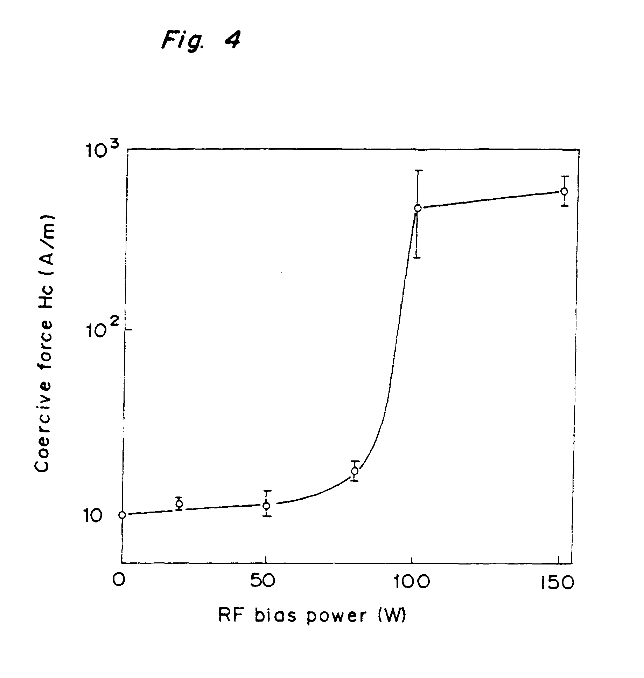

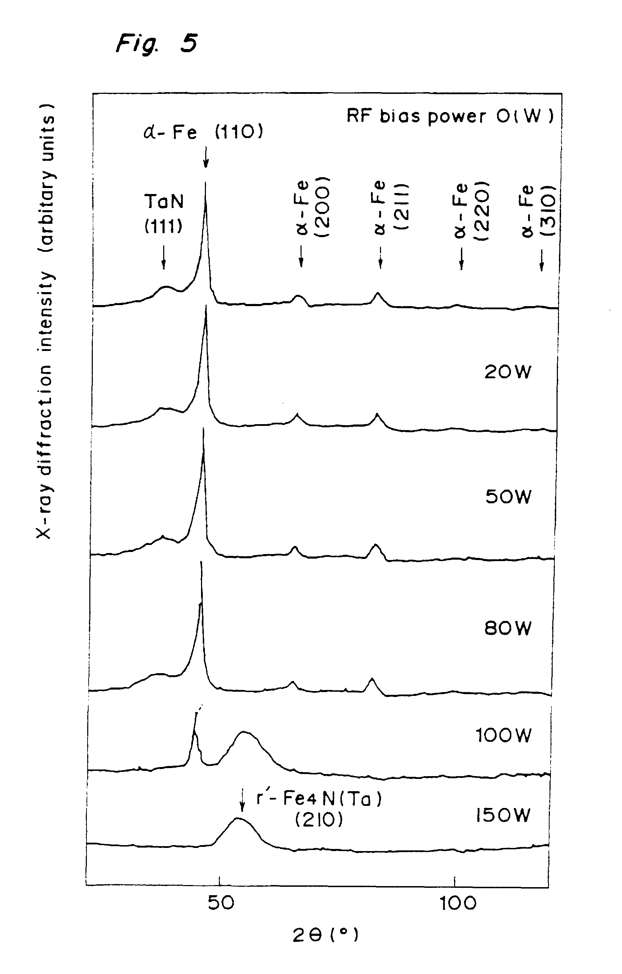

The resultant film is heat-treated in vacuum for one hour at 550°C without magnetic field. Fig. 4 is a graph showing a relation between the coercive force of the resultant film and the high frequency bias power applied to the substrate holder. It is clear from Fig. 4 that the bias power from 0 to 80 W produces a soft magnetic film of a superior soft magnetic characteristic represented by a coercive force Hc less than 20 A/m. On the other hand, the bias power higher than 100 W results in a rapid increase in the coercive force (about 500 A/m) and in an inferior soft magnetic characteristic. The variation in the soft magnetic characteristic is resulted from the change in the structure of the magnetic film as shown in Fig. 5.

Fig. 5 shows the bias dependency in the relation to a x-ray diffraction pattern of the film with the bias power changing from 0 to 80 W. It is clear from Fig. 5 that the film having a superior soft magnetic characteristic is of a fine structure which comprises a mixture of α-Fe having expanded lattices and nitride of tantalum. An electron microscopic observation indicates that the α-Fe crystal is of an average grain size less than 15 nm and the tantalum nitride fine particle is of an average grain size less than 5 nm. The film showing a superior soft magnetic characteristic is provided with a saturation magnetic flux density Bs of 1.5 to 1.6T and a saturation magnetostriction λs of an absolute value less than 10⁻⁶.

### (Example 2)

A soft magnetic film of Fe-Ta-N system is formed in a similar way to that of Example 1 under being applied with a high frequency bias power ranging from 0 to 80 W. The soft magnetic film of Fe-Ta-N system has a film thickness of 2.5 µm and is measured with the magnetic permeability. The soft magnetic film according to the example 2 shows the coercive force, saturation magnetic flux density, saturation magnetostriction, the film composition and the film structure similar to those of example 1.

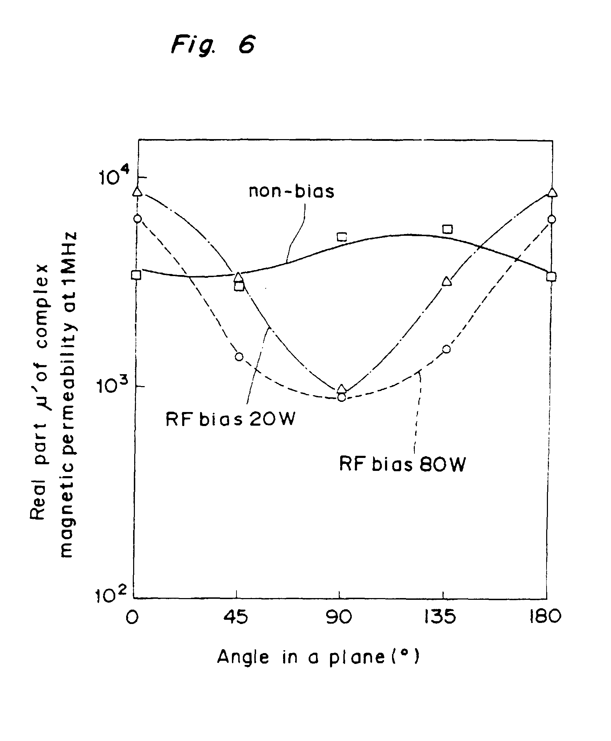

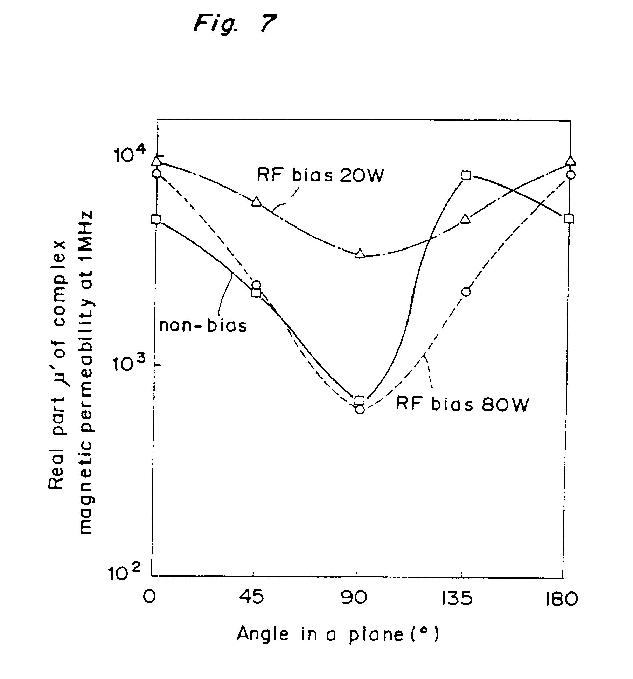

Since the soft magnetic film is formed by an oblique sputtering projection, the soft magnetic film shows the anisotropy of magnetic permeability of the film plane which varies with the position of the substrate. Figs. 6 and 7 are graphs showing a variation in the real part µ' of complex magnetic permeability at 1 MHz with a variation in the position of the substrate.

The film formation is carried out by applying the frequency bias power of 0, 20W and 80W. The film formed at the substrate position shown in Fig. 6 shows an isotropy of high magnetic permeability at non-bias power, and shows an uniaxial anisotropy of high permeability at the bias power of 20W and 80W. On the other hand, the film formed at the substrate position shown in Fig. 7 shows an anisotropy of high magnetic permeability at non-bias power, an relative isotropic permeability at the bias power of 20W and an uniaxial anisotropy of magnetic permeability at the bias power of 80W. The soft magnetic film formed at the bias of 80W shows that the high magnetic permeability of an uniaxial anisotropy has a high degree of orientation at one direction and is very suitable for use in a core material for the MIG head.

However, in the case of a soft magnetic film of a multilayer type comprising alternatively laminated layers through an electric insulating layer, one of which is a soft magnetic layer of Fe-Ta-N formed under the condition of non-bias power and the other is a soft magnetic layer of Fe-Ta-N formed under the condition of RF 20 W bias power, all the resultant soft magnetic films come to be isotropic at the substrate position shown in Fig. 6 and Fig. 7, thereby there is attained enlargement of isotropic film forming area within the substrate holder. The reason is that the resultant magnetic permeability is not dependent on the arithmetical mean of the two laminated layers and tends to be dependent on the higher magnetic permeability, so that isotropic film formation is realized.

### (Example 3)

Soft magnetic films of Fe-Ta-N system are formed at bias powers of zero and 20 W and are alternately laminated to each other through a SiO₂ insulating film. The SiO₂ insulating film at each layer is of a thickness of 0.15 µm and the soft magnetic film is of a thickness of 2.5 µm. The soft magnetic film of multilayer type has a total thickness of 15 µm.

For the comparison, soft magnetic films of multilayer type comprising Fe-Ta-N system are formed by two methods; one method is to laminate alternately the soft magnetic film (thickness 2.5 µm) obtained at non-bias power and the SiO₂ insulating film (thickness 0.15 µm) into a total thickness of 15 µm; and another method is to laminate alternately the soft magnetic film (thickness 2.5 µm) obtained at 20 W negative power and the SiO₂ insulating film (thickness 0.15 µm) into a total thickness of 15 µm. The Fe-Ta-N magnetic film at each layer comprises Ta 10.5 atomic %, N 10 atomic % and Fe 79.5 atomic %, similar to those of Examples 1 and 2. The Fe-Ta-N soft magnetic film at each layer shows the coercive force, saturation magnetic flux density, saturation magnetostriction, the film composition and the film structure similar to those of examples 1 and 2.

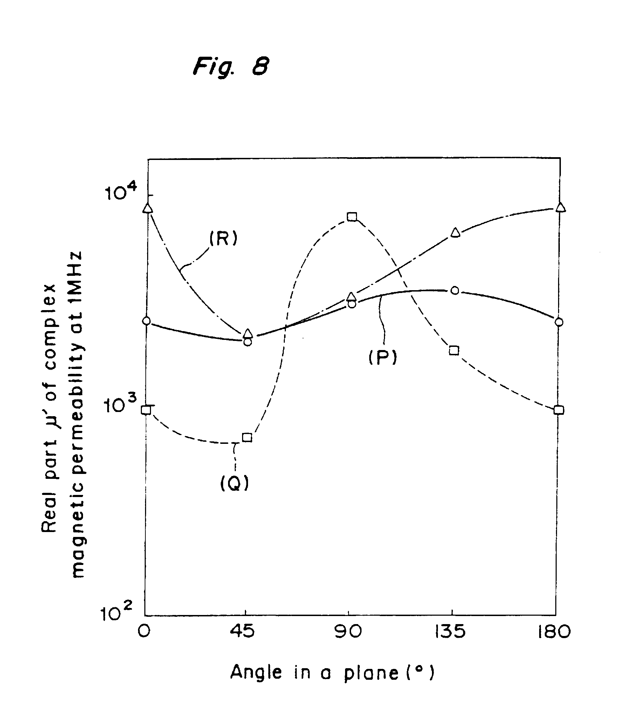

Fig. 8 is a graph showing a variation in the real part µ' of complex magnetic permeability of the three soft magnetic films at 1 MHz with a variation in the position of the substrate. A reference character (P) denotes a multilayer type of soft magnetic film obtained by laminating alternately soft magnetic films of Fe-Ta-N system formed at RF bias powers of zero and 20W to each other through a SiO₂ insulating film. A reference character (Q) denotes a multilayer type of soft magnetic film obtained by laminating alternately soft magnetic films of Fe-Ta-N system formed at RF bias powers of zero to each other through a SiO₂ insulating film. A reference character (R) denotes a multilayer type of soft magnetic film obtained by laminating alternately soft magnetic films of Fe-Ta-N system formed at RF bias powers of 20 W to each other through a SiO₂ insulating film.

As shown in Fig. 8, the anisotropy of the magnetic permeability is observed with multilayer type of soft magnetic film obtained by integrating alternately soft magnetic films of Fe-Ta-N system formed at RF bias powers of zero to each other through a SiO₂ insulating film (Q) and multilayer type of soft magnetic film obtained by laminating alternately soft magnetic films of Fe-Ta-N system formed at negative bias powers of 20W to each other through a SiO₂ insulating film (R). On the other hand, the isotropy of the high magnetic permeability is observed with the multilayer type of soft magnetic film obtained by laminating alternately soft magnetic films of Fe-Ta-N system formed at RF bias powers of zero and 20W to each other through a SiO₂ insulating film (P).

This effect is confirmed with all of positions of the substrate. The isotropic high magnetic permeability is observed over a large area. Therefore, it is possible to manufacture the core material for use in the laminated-type head.

This example is directed to the multilayer type of soft magnetic film obtained by laminating alternately soft magnetic films of Fe-Ta-N system formed at non-bias and at RF bias power of 20 W to each other through a SiO₂ insulating film. The applied bias voltage may be DC bias voltage. It is found that the same effect as above can be obtained with the multilayer type of soft magnetic film in which the two soft magnetic films of Fe-Ta-N system adjacent to each other through a SiO₂ insulating film are applied with bias powers different from each other (including zero).

### (Example 4)

A laminated- type head as shown in Fig.9 is manufactured by heat-treating in no magnetic field a magnetic head made of an isotropic soft magnetic multifilms having high magnetic permeability, which is prepared by alternately laminating a soft magnetic film formed at non-bias power and a soft magnetic film formed at 20 W RF bias power through a SiO₂ insulating film. Apparent from Fig.10 showing an enlargement of the head, the head is provided with as track width of 15 µm, a gap length of 0.2 µm, a gap depth of 20 µm and the number of coil turns is 18. Output of the head is measured as a self-recording reproducible characteristics at a relative speed of 4.5m/s in a drum tester by use of MP tape having a coercive force of 120 kA/m. As compared with the laminated-type head made of the multilayer film (Q), C/N is improved by more than about 5dB in a high frequency field of 3MHz to 10MHz.

It is confirmed that the above isotropic forming effect is shown in every sites or positions of substrates, so that mass-production for larger film forming area is possible.

This example is directed to the multilayer type of soft magnetic film obtained by laminating alternately soft magnetic films of Fe-Ta-N system formed at non-bias and at RF bias power of 20W to each other through a SiO₂ insulating film. The applied bias voltage may be DC bias voltage. It is found that the same effect as above can be obtained with the multilayer type of soft magnetic film in which the two soft magnetic films of Fe-Ta-N system adjacent to each other through a SiO₂ insulating film are applied with bias powers different from each other (including zero).

### (Example 5)

An MIG type head as shown in Fig.11 is manufactured by heat-treating in no magnetic field a magnetic head made of a soft magnetic film of Fe-TA-N system having a thickness of about 4 µm which is prepared by forming soft magnetic film formed at 80 W RF bias power on a substrate of Mn-Zn ferrite covered with a SiO₂ insulating film having a thickness of about 10 nm. All the resultant films formed at 80 W RF bias show an uniaxial anisotropic property and are arranged in the same direction. Apparent from Fig.12 showing an enlargement of the head, the head is provided with a track width of 15 µm, a gap length of 0.2 µm, a gap depth of 20 µm and the number of the turn of a coil is 20. Output of the head is measured as a self-recording reproducible characteristics at a relative speed of 4.5m/s in a drum tester by use of MP tape having a coercive force of 120 kA/m. As compared with the MIG type head made of the film of Fe-Ta-N formed at non-bias condition, in which different set position of the ferrite substrates causes the resultant films to have a variety of head outputs, all the films formed at 80 W RF bias power show uniaxial magnetic permeability arranged in the same direction, so that mass-production for MIG head according to the present invention having a stable head output is possible.

### (Example 6)

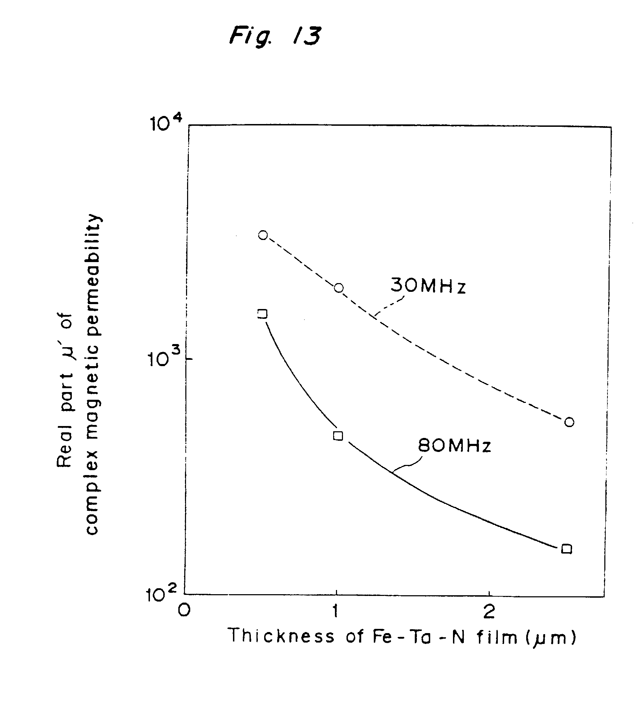

Soft magnetic films of Fe-Ta-N system are formed at bias powers of zero and 20W and are alternately laminated to each other through a SiO₂ insulating film. The SiO₂ insulating film at each layer is of a thickness of 0.15 µm and the soft magnetic film is of a thickness ranging from 0.5 to 2.5 µm. The soft magnetic film of multilayer type has a total thickness of 5 µm. Each of the soft magnetic film of various layers has a film composition and the film structure the same as those of example 1. These films show the isotropic high magnetic permeability all over the large area. Fig. 13 is a graph showing a relation between the thickness of soft magnetic film of Fe-Ta-N system at each of layers and the real part µ' of the complex magnetic permeability at 30 MHz and 80 MHz. Fig. 13 clearly indicates that the soft magnetic film of Fe-Ta-N system shows an increase in the real part µ' of the complex magnetic permeability at a high frequency (30 MHz and 80 MHz) with a decrease in the thickness of the film.

Soft magnetic films of Fe-Ta-N system are formed at bias powers of zero and 20W and are alternately laminated to each other through a SiO₂ insulating film. The soft magnetic film of Fe-Ta-N system at each layer is of a thickness of 0.5 µm. The SiO₂ insulating films at various layers are changed in the thickness so that the soft magnetic film of multilayer type has a total thickness of 5 µm.

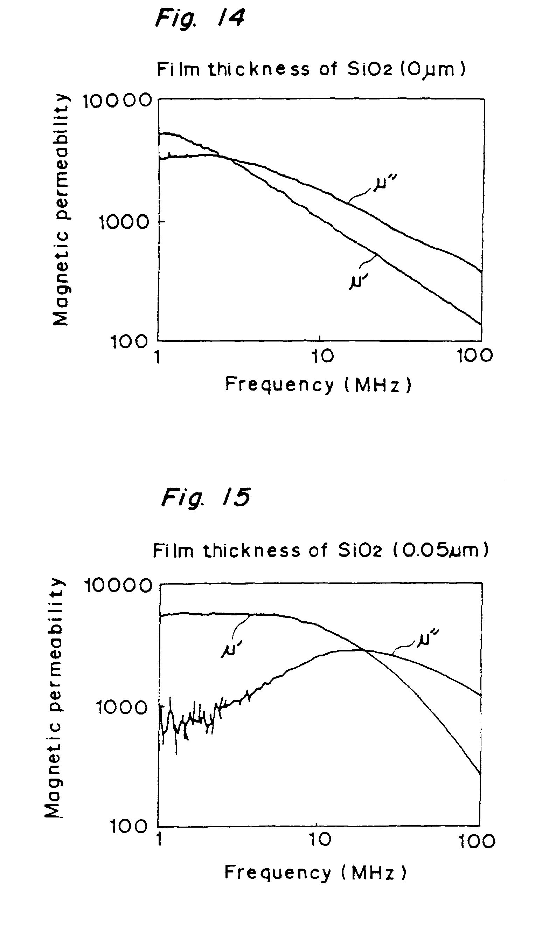

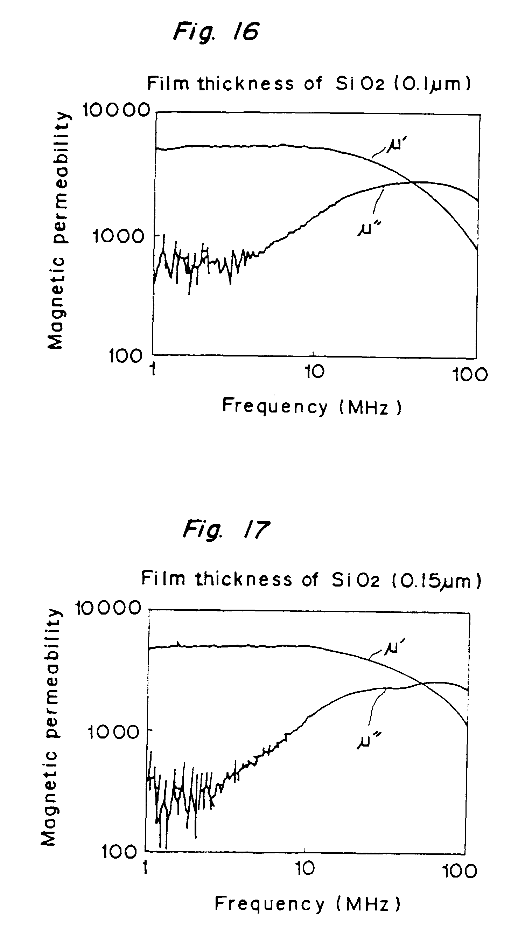

The soft magnetic film of multilayer type has the SiO₂ insulating film interposed therebetween and shows the isotropic high magnetic permeability all over the large area of the substrate position in a similar way to that of example 3. Figs. 14, 15, 16 and 17 are graphs showing a variation in the real part µ' and the Imaginary part µ'' of complex magnetic permeability of the soft magnetic films having the SiO₂ insulating films in a thickness of 0, 0.05, 0.1 and 0.15 µm with a variation in the frequency, respectively.

Figs. 14, 15, 16 and 17 clearly show that an increase in the thickness of the SiO₂ insulating films results in an increase in the real part µ' of complex magnetic permeability at a high frequency range. In addition, it is understood that the thicker film causes the frequency at which the imaginary part µ'' of complex magnetic permeability shows the maximum, to shift to the higher frequency.

When the SiO₂ insulating film is of a thickness higher 0.3 µm, there is no frequency dependency of the real portion µ' and the imaginary part µ'' of complex magnetic permeability. In the soft magnetic film of multilayer type, the Fe-Ta-N films adjacent through the SiO₂ insulating film are formed at the different bias powers (including zero). In this case, it is possible to obtain the isotropy of the high permeability at the higher frequency with the thinner thickness of the soft magnetic film of Fe-Ta-N system at each layer and with the thicker thickness of the SiO₂ insulating film. The adjustment of the thickness of the soft magnetic film and the SiO₂ insulating film makes it possible to adjust the operable frequency of the soft magnetic film of a multilayer type. Accordingly, it is possible to manufacture the soft magnetic film of multilayer type suitable for a core material used in the laminated-type head all over the large area and at a high production yield.

The description in this embodiment is directed to the soft magnetic film of Fe-Ta-N system. However, it is possible to obtain the same effect as above by applying the method of this embodiment to a film formation of the soft magnetic filed in any other systems such as a soft magnetic film including, as a main ingredient, Fe (iron) and 5 to 20 atomic % of N (nitrogen) and 5 to 15 atomic % of M (metal which is at least one element selected from the group consisting of Ta, Zr, Hf, Nb and Ti) and a modified system further including additional additives, Cr, Al, Si or Ru as a material to improve the corrosion resistance. A further superior soft magnetic characteristic can be obtained by using the following the film composition; a soft magnetic film including, as a main ingredient, Fe (iron) and 5 to 20 atomic % of N (nitrogen) and 5 to 15 atomic % of M (metal which is at least one element selected from the group consisting of Ta, Zr, Hf, Nb and Ti), wherein said soft magnetic film comprises a mixture of 1) fine crystals of α-Fe which solve at least one element selected from the group consisting of (Ta, Zr, Hf, Nb and Ti), N (nitrogen) and metal (M) nitride and which have an average grain size less than 15 nm and 2) fine particles of metal nitride having a grain size less than 5 nm.

This example is directed to the multilayer type of soft magnetic film obtained by laminating alternately soft magnetic films of Fe-Ta-N system formed at non-bias and at RF bias power of 20W to each other through a SiO₂ insulating film. The applied bias voltage may be DC bias voltage. It is also found that the same effect as above can be obtained with the multilayer type of soft magnetic film in which the two soft magnetic films of Fe-Ta-N system adjacent to each other through a SiO₂ insulating film are applied with bias powers different from each other (including zero).

As another example of the modification, a change in the magnetic field distribution as shown in Fig.2 on the surface of the target results in a change in the plasma state and in a variation in the anisotropy of the magnetic permeability of the film plane with a variation in the substrate position. In this case, it is possible to achieve the effect the same as that described in this embodiment.

It is to be noted that the method for making the soft magnetic film described in this embodiments is applicable for any other systems including, as a main ingredient, Fe or Co such as Sendust (Fe-Ai-Si alloy system), Fe-M-(C,B) or Co-M-(N,C) system; wherein M is an element selected from the group consisting of Zr, Hf, Ti, Nb and Ta.

## Claims

1. A method for producing a soft magnetic film on a substrate (4), said film being mainly composed of a ferromagnetic metal component and said method comprising the steps of
a) providing a target (1) by means of a flat plate in a magnetron sputtering apparatus,
b) arranging permanent magnets (2) to generate a magnetic field at the target surface such that the lines of magnetic force (3) are parallel to the target surface facing said substrate (4),
c) placing said substrate (4) above said target (1) and parallel to the surface thereof, and
d) operating said magnetron sputtering apparatus,
**characterized in that**
said permanent magnets (2) are arranged in such a manner that
b1) the lines of magnetic force (3) on opposite sides of a centerline (A) have opposite directions, said centerline (A) being parallel to the lines of magnetic force (3) and symmetrically separating said target surface, and
b2) the magnetic strength distribution on both sides of said centerline (A) is symmetrical.

2. The method of claim 1, characterized in that the soft magnetic film comprises Co or Fe as a main ingredient.

3. The method of claim 1, characterized in that the soft magnetic film comprises Fe as a main ingredient and 5 to 20 atomic % of N and 5 to 15 atomic % of a metal M which is at least one element selected from the group consisting of Ta, Zr, Hf, Nb and Ti.

4. The method of claim 3, characterized in that said metal M is Ta.

5. The method of anyone of the preceding claims, characterized in that during the sputtering step, a negative bias voltage is continuously applied to the substrate to be provided with the soft magnetic film.

6. The method of claim 5, characterized in that the power density of the applied negative bias voltage is set to be 3700 W/m² or less.

7. Use of the method of anyone of claims 1 to 3 for making a soft magnetic multiple film that comprises soft magnetic films and insulating films alternately laminated,
**characterized in that**
at least two soft magnetic films are formed on said substrate (4) by means of said sputtering apparatus, which soft magnetic films are separated from each other by a neighbouring insulating film,
wherein each soft magnetic film is formed with negative bias powers different from each other (including zero bias) in order to have a larger isotropic area of the resulting soft magnetic film.

8. Use of the method according to any one of claims 2 to 5 for making a soft magnetic film composed of Fe as a main ingredient and of 5 to 20 atomic % of N and 5 to 15 atomic % of a metal M which is at least one element selected from the group consisting of Ta, Zr, Hf, Nb and Ti,
wherein said soft magnetic film comprises a mixture of fine crystals of α-Fe and fine particles of said metal M, which fine crystal lattices of α-Fe is expanded by a solid solution with at least one element or compound selected from the group consisting of Ta, Zr, Hf, Nb, Ti, N and nitride of metal M, the fine crystals of α-Fe having an average grain size of 15 nm or less and the fine crystals of metal nitride having an average grain size of 5 nm or less.

9. A magnetic head in which at least a part of a magnetic circuit comprises the soft magnetic film or multi-film formed by the method according to anyone of claims 1 to 8.

10. A sputtering electrode for carrying out the method according to anyone of claims 1 to 8, said electrode comprising
permanent magnets (2) arranged to generate a magnetic field at the target surface such that the lines of magnetic force (3) are parallel to the target surface facing said substrate (4),
**characterized in that**
the lines of magnetic force (3) on opposite sides of a centerline (A) have opposite directions, said centerline (A) being parallel to the lines of magnetic force (3) and symmetrically separating said target surface,
wherein the magnetic strength distribution on both sides of said centerline (A) is symmetrical.

## Patentansprüche

1. Verfahren zum Herstellen einer weichmagnetischen Schicht auf einem Substrat (4), wobei die Schicht hauptsächlich aus einer Komponente eines ferromagnetischen Metalls aufgebaut ist und wobei das Verfahren die Schritte umfaßt, daß man
a) mit Hilfe einer flachen Platte in einem Magnetronsputtergerät ein Target (1) bereitstellt,
b) Permanentmagneten (2) zum Erzeugen eines Magnetfelds an der Targetoberfläche so anordnet, daß die magnetischen Kraftlinien (3) parallel zur Targetoberfläche verlaufen, die dem Substrat (4) gegenübersteht,
c) das Substrat (4) oberhalb des Targets (1) und parallel zu dessen Oberfläche anordnet und
d) das Magnetronsputtergerät betreibt,
**dadurch gekennzeichnet**, daß
die Permanentmagneten (2) so angeordnet sind, daß
b1) die magnetischen Kraftlinien (3) an entgegengesetzten Seiten einer Mittellinie (A) entgegengesetzte Richtungen haben, wobei die Mittellinie (A) parallel zu den magnetischen Kraftlinien (3) verläuft und die Targetoberlfäche symetrisch unterteilt, und
b2) die Verteilung des Magnetfelds auf beiden Seiten der Mittellinie (A) symetrisch ist.

2. Verfahren nach Anspruch 1, dadurch gekennzeichnet, daß die weichmagnetische Schicht als Hauptbestandteil Co und Fe enthält.

3. Verfahren nach Anspruch 1, dadurch gekennzeichnet, daß die weichmagnetische Schicht als Hauptbestandteil Fe und 5 bis 20 Atom-% N und 5 bis 15 Atom-% eines Metalls M enthält, welches mindestens ein Element ist ausgewählt aus der Gruppe Ta, Zr, Hf, Nb und Ti.

4. Verfahren nach Anspruch 3, dadurch gekennzeichnet, daß das Metall M Ta ist.

5. Verfahren nach einem der vorhergehenden Ansprüche, dadurch gekennzeichnet, daß man während des Sputterns an das mit der weichmagnetischen Schicht zu versehende Substrat eine negative Vorspannung kontinuierlich anlegt.

6. Verfahren nach Anspruch 5, dadurch gekennzeichnet, daß die Energiedichte der angelegten negativen Vorspannung auf 3.700 W/m² oder weniger eingestellt wird.

7. Verwendung des Verfahrens nach einem der Ansprüche 1 bis 3 zum Herstellen einer weichmagnetischen Mehrfachschicht, die alternierend aufeinanderlaminierte weichmagnetische Schichten und Isolationsschichten aufweist,
**dadurch gekennzeichnet**, daß
auf dem Substrat (4) mit Hilfe des Sputtergeräts mindestens zwei weichmagnetische Schichten gebildet werden, wobei die weichmagnetischen Schichten voneinander durch eine benachbarte Isolationsschicht getrennt sind,
wobei jede weichmagnetische Schicht mit voneinander abweichenden negativen Vorspannungen (unter Einschluß der Vorspannung null) hergestellt wird, um einen größeren isotropischen Bereich der entstehenden weichmagnetischen Schicht zu erhalten.

8. Verwendung des Verfahrens nach einem der Ansprüche 2 bis 5 zum Herstellen einer weichmagnetischen Schicht, die aufgebaut ist aus Fe als Hauptbestandteil und aus 5 bis 20 Atom-% N und 5 bis 15 Atom-% eines Metalls M, welches mindestens ein Element ist ausgewählt aus der Gruppe Ta, Zr, Hf, Nb, und Ti,
wobei die weichmagnetische Schicht ein Gemisch aus feinen Kristallen von α-Fe und feinen Teilchen des Metalls M enthält, wobei die feinkristallinen Gitter des α-Fe durch eine feste Lösung mit mindestens einem Element oder einer Verbindung ausgewählt aus Ta, Zr, Hf, Nb, Ti, N und einem Nitrit des Metalls M expandiert werden, wobei die feinen Kristalle des α-Fe eine mittlere Korngröße von 15 nm oder weniger und die feinen Kristalle des Metallnitrits eine mittlere Korngröße von 5 nm oder weniger aufweisen.

9. Magnetkopf, bei dem mindestens ein Teil einer magnetischen Schaltung den weichmagnetischen Film oder weichmagnetischen Mehrfachfilm aufweist, hergestellt mit dem Verfahren gemäß einem der Ansprüche 1 bis 8.

10. Sputterelektrode zur Durchführung des Verfahrens gemäß einem der Ansprüche 1 bis 8, wobei die Elektrode aufweist
Permanentmagneten (2), die zum Erzeugen eines Magnetfelds an der Targetoberfläche so angeordnet sind, daß die magnetischen Kraftlinien (3) parallel zur Targetoberfläche verlaufen, die dem Substrat (4) gegenübersteht,
**dadurch gekennzeichnet**, daß
die magnetischen Kraftlinien (3) an entgegengesetzten Seiten einer Mittellinie (A) entgegengesetzte Richtungen haben, wobei die Mittellinie (A) parallel zu den magnetischen Kraftlinien (3) verläuft und die Targetoberlfäche symetrisch unterteilt,
wobei die Verteilung des Magnetfelds auf beiden Seiten der Mittellinie (A) symetrisch ist.

## Revendications

1. Méthode pour la production d'un film magnétique doux sur un substrat (4), ledit film étant principalement composé d'un élément de métal ferromagnétique, ladite méthode comportant les étapes de
a) fourniture d'une cible (1) au moyen d'une plaque plate dans un appareil de pulvérisation par magnétron,
b) disposition d'aimants permanents (2) pour générer un champ magnétique à la surface de la cible de sorte que les lignes de force magnétique (3) soient parallèles à la surface de cible faisant face audit substrat (4),
c) placement dudit substrat (4) au-dessus de ladite cible (1) et parallèle à sa surface, et
d) mise en oeuvre dudit appareil de pulvérisation par magnétron,
caractérisée en ce que
lesdits aimants permanents (2) sont disposés de manière à ce que
b1) les lignes de force magnétique (3) sur des côtés opposés d'une ligne centrale (A) aient des directions opposées, ladite ligne centrale (A) étant parallèle aux lignes de force magnétique (3) et séparant de façon symétrique ladite surface de la cible, et
b2) la distribution d'intensité magnétique sur les deux côtés de ladite ligne centrale (A) soit symétrique.

2. Méthode selon la revendication 1, caractérisée en ce que le film magnétique doux comporte du Co ou du Fe comme ingrédient principal.

3. Méthode selon la revendication 1, caractérisée en ce que le film doux magnétique comporte du Fe comme ingrédient principal, et 5 à 20 % atomique de N et 5 à 15 % atomique d'un métal M qui est au moins un élément sélectionné parmi le groupe consistant en Ta, Zr, Hf, Nb et Ti.

4. Méthode selon la revendication 3, caractérisée en ce que ledit métal M est du Ta.

5. Méthode selon l'une quelconque des revendications précédentes, caractérisée en ce que, durant l'étape de pulvérisation, une tension de polarisation négative est appliquée de façon continue au substrat devant être prévu avec le film magnétique doux.

6. Méthode selon la revendication 5, caractérisée en ce que la densité de puissance de la tension de polarisation négative appliquée est ajustée pour être 3700 W/m² ou moins.

7. Utilisation de la méthode selon l'une quelconque des revendications 1 à 3 pour la fabrication d'un film multiple magnétique doux qui comporte des films magnétiques doux et des films isolants alternativement disposés en couches,
caractérisée en ce que
au moins deux films magnétiques doux sont formés sur ledit substrat (4) au moyen dudit appareil de pulvérisation, lesquels films magnétiques doux sont séparés les uns des autres par un film isolant adjacent,
dans lequel chaque film magnétique doux est formé avec des puissances de polarisation négatives différentes les unes des autres (incluant la polarisation nulle) afin d'avoir une zone isotropique plus grande du film magnétique doux résultant.

8. Utilisation de la méthode selon l'une quelconque des revendications 2 à 5, pour la fabrication d'un film magnétique doux composé de Fe comme ingrédient principal, et de 5 à 20 % atomique de N et 5 à 15 % atomique d'un métal M qui est au moins un élément sélectionné parmi le groupe consistant en Ta, Zr, Hf, Nb et Ti,
dans laquelle ledit film magnétique comporte un mélange de fins cristaux de α-Fe et de fines particules dudit métal M, lesquelles matrices de cristal fins de α-Fe sont étendues par une solution solide avec au moins un élément ou composant sélectionné parmi les groupes consistant en Ta, Zr, Hf, Nb, Ti, N et du nitrure de métal M, les fins cristaux de α-Fe ayant une dimension moyenne de grains de 15 nm ou moins, et les fins cristaux de nitrure de métal ayant une dimension moyenne de grains de 5 nm ou moins.

9. Tête magnétique dans laquelle au moins une partie d'un circuit magnétique comporte le film magnétique doux ou le multifilm magnétique doux formé par la méthode selon l'une quelconque des revendications 1 à 8.

10. Electrode de pulvérisation pour effectuer la méthode selon l'une quelconque des revendications 1 à 8, ladite électrode comportant
des aimants permanents (2) disposés pour générer un champ magnétique au niveau de la surface de la cible de sorte que les lignes de force magnétique (3) soient parallèles à la surface de cible faisant face audit substrat (4),
caractérisée en ce que
les lignes de force magnétique (3) sur des côtés opposés d'une ligne centrale (A) ont des directions opposées, ladite ligne centrale (A) étant parallèle aux lignes de force magnétique (3) et séparant de façon symétrique ladite surface de cible,
dans laquelle la distribution d'intensité magnétique des deux côtés de ladite ligne centrale (A) est symétrique.
